(19) Europäisches Patentamt
European Patent Office
Office européen des brevets

(11) EP 0 443 442 B1

(12) **EUROPEAN PATENT SPECIFICATION**

(45) Date of publication and mention
of the grant of the patent:
**04.09.1996   Bulletin 1996/36**

(51) Int Cl.6: **G11B 11/10**

(21) Application number: **91102099.8**

(22) Date of filing: **14.02.1991**

(54) **Magneto-optical recording medium**

Magneto-optisches Aufzeichnungsmedium

Support d'enregistrement magnéto-optique

(84) Designated Contracting States:
**DE FR GB NL**

(30) Priority: **16.02.1990   JP 33685/90**

(43) Date of publication of application:
**28.08.1991   Bulletin 1991/35**

(73) Proprietor: **MITSUBISHI PLASTICS INDUSTRIES LIMITED**
**Tokyo 100 (JP)**

(72) Inventors:
- **Aritake, Toshiyuki, c/o Hiratsuka Plant**
  **Hiratsuka-shi, Kanagawa (JP)**
- **Yamada, Shingetsu, c/o Hiratsuka Plant**
  **Hiratsuka-shi, Kanagawa (JP)**

(74) Representative: **VOSSIUS & PARTNER**
**Postfach 86 07 67**
**81634 München (DE)**

(56) References cited:
**EP-A- 0 279 581**          **EP-A- 0 304 873**
**EP-A- 0 320 286**          **US-A- 4 670 353**

- **DIGESTS OF INTERNATIONAL MAGNETICS CONFERENCE April 1990, BRIGHTON, UK TOKI ET AL: 'Sputtered Tb/FeCoTi multilayered films for magneto-optical recording'**
- **PATENT ABSTRACTS OF JAPAN vol. 8, no. 202 (P-300)(1639) 14 September 1984 & JP-A-59 084 358**

**Description**

The present invention relates to a magneto-optical recording medium which can be used in an optical disks, optical cards and the like and in which information can be recorded and/or from which the recorded information can be read out making use of laser beams. More particularly, the present invention relates to a magneto-optical recording medium having an excellent reproduction property and preventing deterioration of the recording film.

The magneto-optical memory has received much attention as a memory which can record a large amount of information in a high density and from which the information can be read out in a high speed. A magneto-optical recording medium for such a magneto-optical memory as described above has a recording layer which is provided with a magnetic film of a rare earth-transient metal amorphous alloy with vertical magnetization such as TbFeCo alloy disclosed in, for example, US-A-4,670,353. EP-A-0 320 286 describes that the use of films represented by the formula $(Pt \text{ and/or } Pd)_y x$ $[RE_x TM_{1-x}]_{1-y}$, wherein RE is at least one rare earth element selected from Nd, Sm, Pr, Ce, Eu, Gd, Tb, Dy and Ho, TM is at least one transition metal selected from Fe and Co, and $0.2x<0.7$ and $0.04<y<0.30$, as a recording layer can prevent the deterioration of the recording layer and improve the reproduction characteristics. Also, it has been proposed to add aluminum or titanium to the rare earth-transient metal alloy recording layer for the same purpose.

However, the above-described additional metals have been added uniformly in the recording layer and no sufficient effects could be obtained in both improvement of reproduction characteristics and prevention of deterioration.

It is an object of the present invention to solve the above-described defects of the prior art and provide a magneto-optical recording medium having excellent reproduction characteristics and a high reliability. This object in solved with the features of the claims.

The above and other objects, effects, features and advantages of the present invention will become more apparent from the following description of embodiments thereof taken in conjunction with the accompanying drawings.

Fig. 1 is a schematic cross-sectional view showing an example of a sputtering apparatus used for the production of the magneto-optical recording medium of the present invention;

Fig. 2 is a schematic cross-sectional view showing an embodiment of the magneto-optical recording medium according to the present invention;

Fig. 3 is a schematic cross-sectional view for explaining the structure of the multi-layered recording layer; and

Fig. 4 is a partially cutaway view in perspective showing another embodiment of the magneto-recording medium according to the present invention.

In the present invention, a recording layer is composed of a plurality of transient metal layers and a plurality of rare earth metal layers, and platinum (Pt), palladium (Pd) or gold (Au) is added into the transient metal layers that is in the vicinity of the transient metal atoms but does not exist near rare earth metal atoms except for the interfaces of the layers.

Hereafter, the invention will be explained in more detail taking Tb as a representative of the rare earth metal including Nd, Dy, Gd, Tb and the like and Fe and Co as representatives of the transient metal.

As a result of various experiments conducted by the present inventors, it has revealed that additional elements to be added in order to improve corrosion resistance, particularly Pt, Pd and Au, do not exhibit their function sufficiently when they exist near Tb due to their mechanism of corrosion resistance. In the case of Ti and Al, as soon as the occurrence of pitting corrosion starts oxide is produced to form a passive state which prevents the pitting corrosion from proceeding further. On the other hand, Pt, Pd and Au have an effect of inhibiting the formation of pinhole-generating nuclei and an effect of condensing metals such as Pt upon the occurrence of pitting corrosion. To date, it has been considered that once pitting corrosion occurs these metals are poor in the effect of improving durability as compared with Ti. However, the present inventors have found that when Tb and FeCo alloy are sputtered separately to form a multi-layer structure and add Pt or the like to the resulting FeCo alloy layer alone, the durability can be improved as compared with the cases where Pt or the like is added to the whole TbFeCo alloy, where Ti or Al is added to the whole TbFeCo alloy and where Ti or Al is added near FeCo alone, thus completing the present invention.

Example 1

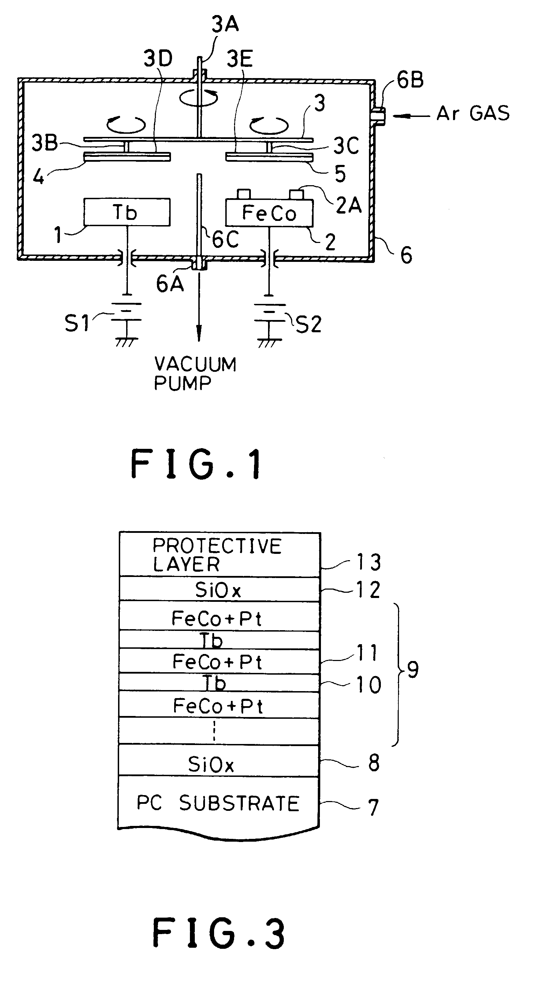

A magneto-optical recording medium was prepared using a sputtering apparatus as illustrated in Fig. 1.

The sputtering apparatus can fit therein a plurality of targets and in this embodiment two targets, i.e., targets 1 and 2 are indicated as being fitted. A holder carrier 3 which can rotate around a rotary shaft 3A has rotary shafts 3B and 3C to which substrate holders 3D and 3E, respectively, are attached rotatably. The substrate holders 3D and 3E support thereon substrates 4 and 5, respectively, so that the substrates can face the respective targets. For simplify the drawing, a mechanism which transmits power for rotation to each shaft is omitted in the drawing. The targets and the substrate holders are housed in a chamber 6 and air in the chamber can be exhausted by a vacuum pump (not shown) through an exhaust port 6A to establish high vacuum and then a predetermined gas, for example argon can be introduced in the chamber through gas inlet 6B. It is desirable to provide a partition wall 6C between the targets 1 and 2. Negative d.c. voltage is applied to the targets 1 and 2 from d.c. power sources S1 and S2, respectively. On the other hand, the chamber 6 is kept at ground voltage. When discharge is performed in the chamber 6 while rotating the substrate holders, the surfaces of the targets 1 and 2 are sputtered. When the substrates 4 and 5 are positioned above the targets 1 and 2, respectively, the substances constituting the corresponding targets, respectively, are deposited on the respective substrates. Therefore, if different substances are used for the targets 1 and 2, the different substances deposit on the substrates so that they are superimposed alternately one on another.

On this occasion, a magnet may be arranged on backside of each target to effect magnetron sputtering, or high frequency power may be applied to between the targets and the chamber to carry out deposition by high frequency sputtering. Further, a shutter may be provided on the lower portion of each substrate and the rotation of the rotary shaft 3A may be stopped at a timing when the substrate is positioned just above the target, and in synchronization therewith the shutter may be opened for a predetermined time to allow the substance constituting the target to be deposited on the substrate. By repeating this procedure, a film having a predetermined thickness can be formed on the substrate.

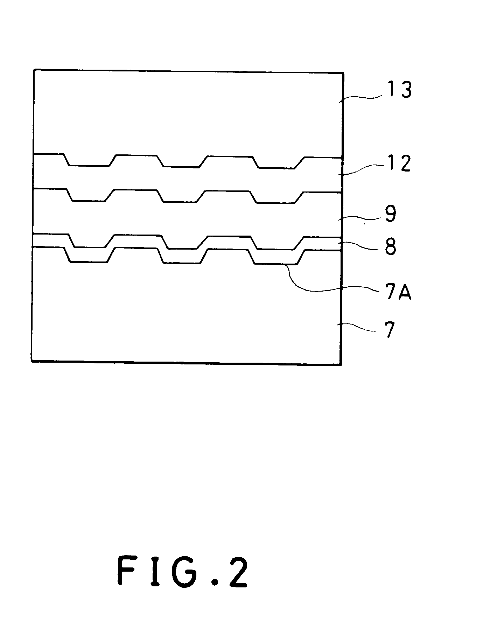

Fig. 2 is a schematic cross-sectional view showing an embodiment of the magneto-optical recording medium according to the present invention prepared using the apparatus illustrated in Fig. 1.

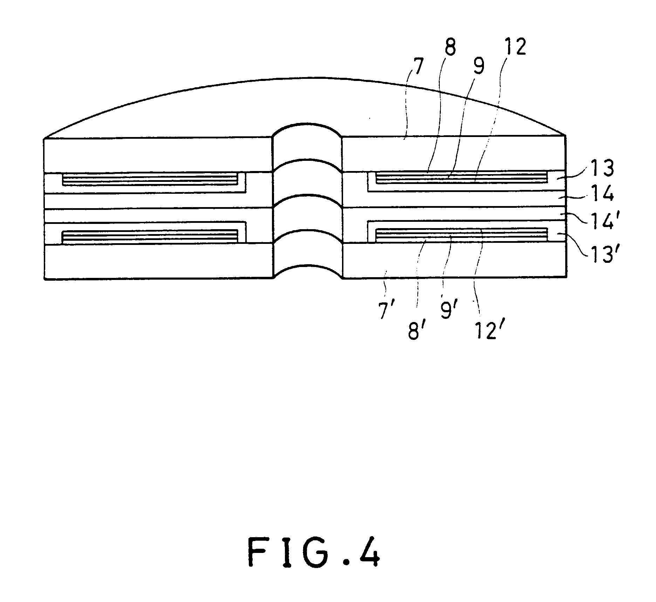

As illustrated in Fig. 2, the magneto-optical recording medium of the present invention includes a transparent substrate 7 on which an SiO film as a dielectric layer 8, a recording layer 9, an SiO protective layer 12 and a resin protective layer 13 are formed in this order. As shown in Fig. 3, the recording layer 9 is composed of repeated laminates of Tb layer 10 and FeCo+Pt layer 11.

A polycarbonate substrate 7 having a diameter of 130 mm and provided with a spiral groove 7A having a width of $0.6\,\mu m$, a depth of 700Å and a pitch of $1.6\,\mu m$ was attached to each of the substrate holders 3D and 3E. After exhausting air from inside the chamber to $10^{-7}$ Torr, argon gas was introduced in the chamber and sputtering was performed using SiO as a target to form an SiO film 8 on the substrate having a thickness of 800Å as an interference layer. Using a Tb target as the target 1 and an FeCo alloy target on which Pt chips 2A were mounted as the target 2, the both targets were sputtered simultaneously, while the substrates were turning around their own axes and at the same time revolving around the rotary shaft 3A at 30 rpm. Thus, on each substrate was formed a recording layer composed of a Tb layer 10 and an FeCo-Pt layer 11 alternately superimposed one on another. The thickness of a single Tb layer was 4.0Å (1.1 atomic layer), and that of a single FeCo-Pt layer was 5.3Å (2.1 atomic layer). By superimposing the two superimposition units 55 times, the recording layer 9 was made to have a film thickness of 800Å.

The deposition rates of the Tb layer and FeCo-Pt layer on the substrates are determined depending on the conditions of sputtering, mainly on the sputtering power, the pressure of argon gas and the revolving speed of the targets. Therefore, if deposition rates are obtained in advance from thicknesses of films formed performing sputtering under predetermined conditions for a predetermined time, the thickness of the deposited layer can be controlled by controlling the deposition time. To note, measurement of film thickness on the order of nanometer (nm) is possible by using a recently available thin film thickness meter with a diamond needle (for example, DEKTAK 3030 made by SLOAN). The number of atomic layers can be calculated from the thicknesses of the respective deposited layers, taking the thickness of a single atomic layer as 3.5Å in the case of the Tb layer or 2.5Å in the case of the FeCo-Pt layer.

The alloy composition of the target 2 and area ratio of the both targets were adjusted so that the composition of Tb, Fe and Co was $Tb_{24}Fe_{63}Co_{13}$, and the area of the Pt chip was determined so that the amount of Pt in the recording layer was 9.5 at.%. The pressure of argon gas at the time of sputtering was 5 mTorr, and powers applied to the Tb target and FeCo-Pt target were 300 W and 700W, respectively. Then, after forming an SiO protective layer 12 to a thickness of 800Å, an ultraviolet ray-curing resin 13 was coated thereon to a thickness of $20\,\mu m$ using a spin coater, and cured with ultraviolet rays to prepare a magneto-optical recording medium. The conditions of sputtering are not limited to those used in the above embodiment, but films can be formed stably under the conditions of an argon gas pressure of 1 to 8 mTorr (argon flow rate: 50 to 100SCCM), a sputtering power of 100 to 5,000 W, and the target revolution rate can be increased up to 100 rpm.

As shown in Fig. 4, after coating a hot melt adhesive 14 on the respective resin protective layers 13 of the two recording media thus prepared using a roll coater to a thickness of $50\,\mu m$, the recording media were bonded to each other so that the surfaces coated with the adhesive can face one another to obtain a double sided disk having a diameter of 130 mm, which was named Example Sample 1.

The above procedures were repeated except that the additional element Pt was replaced by Pd or Au to prepare double sided disks, which were named Example Samples 2 and 3, respectively.

An optical disk was prepared in the same manner as Example Sample 1 except that only one type of target, i.e., TbFeCo alloy on which Ti chip had been mounted, was used as the target for forming the recording layer and that Ti was added uniformly in the recording layer. This was named Comparative Sample 1. Similarly, Comparative Samples 2, 3, 4 and 5 were prepared by uniformly adding Al, Pt, Pd and Au, respectively, to the respective recording layers. Further, optical disks were prepared in the same manner as Example Sample 1 except that Ti and Al, respectively, were mounted on the FeCo alloy chip instead of Pt and recording layers of a multi-layer structure were formed. These optical disks were named Comparative Samples 6 and 7, respectively. The state of superimposition of the recording layer was all the same for Example Samples 2 and 3 and Comparative Samples 6 and 7 except that different additional elements were added to different samples.

The samples thus prepared were subjected to durability test as described below and change in bit error rate (B.E.R.) of recorded information was examined.

Durability Test

Each disk sample was held vertically in a 70°C and 85% RH thermo-hygrostat so that no excessive strain could be applied to the disk, and changes in B.E.R. after 500 hours, 1,000 hours and 2,000 hours were evaluated.

B.E.R. Evaluation

Signals (1 MHz) were recorded in each disk at 1,800 rpm in 4,000 tracks starting from a position of 30 mm in diameter using an optical disk tester OMS-1000 produced by Nakamichi Co., Ltd., and the signals were reproduced by irradiating 1.0 mW laser beam to measure initial bit error rate (BER), which was named $BER_0$. After durability test for t hours, recorded signals are reproduced to measure $(BER)_t$ and $\frac{(BER)_t}{(BER)_0}$ was obtained. If $\frac{(BER)_{2000}}{(BER)_0} \leqq 5.0$, the disk was judged to be acceptable.

It can be estimated that durability of 70°C X 85%RH 2000 hours corresponds to durability for no shorter than 10 years. A fluorescent X ray spectrometry was used for the analysis of composition.

Table 1

| Sample No. | Structure of Recording Layer | Additional Element | Addition Amount (at.%) | Relative B.E.R.* After Aging at 70°C X85% RH | | |
|---|---|---|---|---|---|---|
| | | | | 500 Hr | 1,000 Hr | 2,000 Hr |
| Comp. Sample 1 | Uniformly added film | Ti | 9.5 | 1.0 | 2.0 | 5.0 |
| Comp. Sample 2 | Uniformly added film | Al | 9.5 | 2.0 | 3.0 | 10.0 |
| Comp. Sample 3 | Uniformly added film | Pt | 9.5 | 2.0 | 4.0 | 13.0 |
| Comp. Sample 4 | Uniformly added film | Pd | 9.5 | 5.0 | 10.0 | 21.0 |
| Comp. Sample 5 | Uniformly added film | Au | 9.5 | 7.0 | 15.0 | 30.0 |
| Comp. Sample 6 | Tb and FeCo-addition super-imposed | Ti | 9.5 | 2.0 | 17.0 | pitting corrosion occurred |
| Comp. Sample 7 | Tb and FeCo-addition super-imposed | Al | 9.5 | 5.0 | 50 | pitting corrosion occurred |
| Example Sample 1 | Tb and FeCo-addition super-imposed | Pt | 9.5 | 1.0 | 1.0 | 1.0 |

Table 1 above shows the results of measurement on each sample. From comparison of Example Samples 1 to 3

## Table 1 (Continued)

| Sample No. | Structure of Record- ing Layer | Addi- tional Element | Addi- tion Amount (at.%) | Relative B.E.R.* After Aging at 70°C X85% RH | | |
|---|---|---|---|---|---|---|
| | | | | 500 Hr | 1,000 Hr | 2,000 Hr |
| Example Sample 2 | Tb and FeCo- addition super- imposed | Pd | 9.5 | 1.0 | 1.0 | 2.0 |
| Example Sample 3 | Tb and FeCo- addition super- imposed | Au | 9.5 | 1.0 | 2.0 | 3.0 |
| Comp. Sample 8 | Tb and FeCo- addition super- imposed | Pt | 0.5 | 2.0 | 6.0 | 15.0 |
| Example Sample 4 | Tb and FeCo- addition super- imposed | Pt | 1.0 | 1.0 | 2.0 | 5.0 |
| Example Sample 5 | Tb and FeCo- addition super- imposed | Pt | 5.0 | 1.0 | 1.0 | 1.5 |
| Comp. Sample 9 | Tb and FeCo- addition super- imposed | Pt | 12.0 | 1.0 | 1.0 | 1.0 |

* A relative value where an initial value is 1.

with Comparative Samples 1 to 5, it is apparent that in the magneto-optical recording medium of the invention increase in bit error after aging is much less than in the conventional recording medium. In particular, comparison with the Comparative Samples 3 to 5 reveals that even if the same element is used as the additional element, remarkable improvement can be obtained by adding Pt, Pd or Au centered near FeCo as in the present invention. However, no improving effect can be obtained when adding Ti or Al in the same manner as in the present invention.

Next, influence of the amount of the additional element was examined. The addition amount can be controlled by controlling the area of the metal chip mounted on FeCo target. Optical disks prepared in the same manner as Example Sample 1 except that the amount of Pt was changed to 0.5, 1.0, 5.0 and 12.0 at.%. The disks obtained were named Comp. Sample 8, Example Samples 4 and 5, and Comp. Sample 9 respectively. Results of measurements on these samples are shown in Table 1 above. If the amount of Pt is small, protective effect is insufficient, and the amount of Pt exceeding 10% deteriorates initial C/N (carrier to noise ratio) characteristics. Therefore, the amount of Pt to be added is required to be within the range from 1.0 to 10.0 at.%. As for Pd and Au, preferred range of addition amount was found to be the same as Pt.

Example 2

Optical disks were prepared in the same manner as Example Sample 1 except that the thicknesses of unit Tb layer and of unit FeCo-Pt layer were changed by controlling power applied to the Tb target and FeCo-Pt target and the speed at which the substrates revolved. The optical disks obtained were named Example Samples 6 to 8 and Comp. Samples 10 and 11. On this occasion, Pt was added in an amount of 6 at.% for each sample. For each sample, signals of 2 MHz were recorded starting from a position of 30 mm in diameter and initial reproduction C/N and C/N after aging in a thermo-hygrostat at 70°C X 85 % RH for 2,000 hours were measured, and change in C/N was examined. Results obtained are shown in Table 2, in which the thicknesses of layers are shown taking the thickness of unit atomic layer as 3.5Å for Tb layer and as 2.5Å for FeCo-Pt layer.

Table 2

| Sample No. | Thickness of Layer | | B.E.R. Change after 75°C, 85%RH, | |
| --- | --- | --- | --- | --- |
| | Tb (Atomic Layer) | FeCo-Pt (Atomic Layer) | 2,000 Hr | Initial C/N |
| Example Sample 6 | 0.5 | 1.0 | 5.0 | 45 dB |
| Example Sample 7 | 1.0 | 2.0 | 1.5 | 49 dB |
| Example Sample 8 | 2.0 | 4.0 | 1.9 | 45 dB |
| Comp. Sample 10 | 0.3 | 0.6 | 9.0 | 45 dB |
| Comp. Sample 11 | 2.5 | 5.2 | 2.0 | 42 dB |

From the results shown in Table 2, it can be seen that the thickness of Tb layer is suitably 0.5 to 2 atomic layers. If it is less than 0.5, the durability is insufficient and if it exceeds 2.0, magnetic interaction between Tb and FeCo is insufficient and initial C/N is deteriorated.

Therefore, the thickness of FeCoPt layer is suitably 1 to 4 atomic layers taking the composition of Tb-Fe-Co alloy into consideration. This is also apparent from Table 2.

The number of repeated layers must be 20 to 300. If this number is less than 20, no sufficient C/N can be obtained while recording sensitivity decreases if this number is more than 300.

The situation is the same as Pt as for Pd and Au.

In the above-described Example Samples, TbFeco-Pt type alloy was used with Tb being selected as the rare-earth metal. However, the rare-earth element layer which is superimposed alternately with FeCo-Pt layer, FeCo-Pd layer or FeCo-Au layer may be composed of Nd, Dy or Gd. Alternatively, two or more rare-earth element may be used together. Two or more of Pt, Pd and Au may be added to the FeCo layer. Further, the Fe/Co ratio of FeCo layer which can be used in the present invention may be within the range which is usually used in magneto-optical recording layer, i.e., $0.5 \leqq x \leqq 1.0$ when the composition of the layer is expressed by $Fe_xCo_{1-x}$.

It is obvious to one skilled in the art that the present invention can be applied not only to bonded type but also to single plate type magneto-optical recording medium.

As explained above, according to the present invention, Pt, Pd or Au as additional element exists as localized near FeCo and therefore these additional elements protect the transient metals very effectively, resulting in that the optical disk prepared is endowed with a high reliability.

The present invention has been described in detail with respect to preferred embodiments, and it will now be apparent from the foregoing to those skilled in the art that changes and modifications may be made without departing from the invention in its broader aspects, and it is the invention, therefore, in the appended claims to cover all such changes and modifications as fall within the true spirit of the invention.

## Claims

1. A magneto-optical recording medium comprising a transparent substrate (7) and a recording layer (9) formed on said substrate (7), wherein said recording layer (9) has a multi-layered structure composed of a first unit layer (11) and a second unit layer (10) superimposed alternately one on another and wherein said recording layer (9) is producible by alternately forming said first unit layer (11) composed of $(Fe_xCo_{1-x})_{1-y}M_y$, where M represents at least one metal element selected from the group consisting of Pt, Pd, and Au, $0.5 < x < 1.0$, and $0.01 < y < 0.1$, and said second unit layer (10) composed of at least one metal selected from the group consisting of Nd, Dy, Gd and Tb on the substrate (7).

2. The magneto-optical recording medium as claimed in Claim 1, characterized in that said first unit layer has a thickness of 1 to 4 atomic layers and said second unit layer has a thickness of 0.5 to 2 atomic layers, and wherein respective 20 to 300 layers of said first and second unit layers are superimposed alternately one on another.

3. The magneto-optical recording medium as claimed in Claim 1 or 2, further comprising a first dielectric thin film (8) formed between said substrate (7) and said recording layer (9).

4. The magneto-optical recording medium as claimed in Claim 3, further comprising an upper dielectric thin film (12) formed on said recording layer (9).

5. The magneto-optical recording medium as claimed in Claim 4, further comprising a protective layer (13) formed on said upper dielectric layer (12) and a second magneto-optical recording medium (7', 8', 9', 12', 13') composed of a second transparent substrate (7'), a second dielectric thin film (8') formed on said second transparent substrate (7'), a second multi-layered recording layer (9') formed on said second dielectric thin film (8'), said second multi-layered recording layer (9') having the same structure as that of said first multi-layered recording layer (9), a second upper dielectric layer (12') formed on said second multi-layered recording layer (9'), and a second protective layer (13') formed on said second upper dielectric layer (12'), said recording medium (7, 8, 9, 12, 13) and said second recording medium (7', 8', 9', 12', 13') being bonded to each other in such a manner that said first protective layer (13) and said second protective layer (13') face one another.

## Patentansprüche

1. Magneto-optisches Aufzeichnungsmedium mit: einem lichtdurchlässigen Substrat (7) und einer auf dem Substrat (7) ausgebildeten Aufzeichnungsschicht (9), wobei die Aufzeichnungsschicht (9) eine mehrschichtige Struktur aufweist, die aus einer ersten Schichteinheit (11) und einer zweiten Schichteinheit (10) gebildet wird, die abwechselnd übereinander angeordnet sind, und wobei die Aufzeichnungsschicht (9) dadurch gebildet wird, daß die erste Schichteinheit (11), die aus $(Fe_xCo_{1-x})_{1-y}M_y$ gebildet wird, wobei M mindestens ein aus der Gruppe Pt, Pd, Au ausgewähltes Metallelement und $0.5 \leq x \leq 1.0$ und $0.01 \leq y \leq 0.1$ gilt, und die zweite Schichteinheit (10), das aus mindestens einem aus der Gruppe Nd, Dy, Gd und Tb ausgewählten Metall gebildet wird, abwechselnd auf dem Substrat (7) angeordnet werden.

2. Magneto-optisches Aufzeichnungsmedium nach Anspruch 1, **dadurch gekennzeichnet, daß** die erste Schichteinheit eine Dicke von 1 bis 4 Atomlagen und die zweite Schichteinheit eine Dicke von 0.5 bis 2 Atomlagen aufweist und jeweils 20 bis 300 Lagen der ersten und der zweiten Schichteinheit abwechselnd übereinander angeordnet sind.

3. Magneto-optisches Aufzeichnungsmedium nach Anspruch 1 oder 2, ferner mit einem zwischen dem Substrat (7) und der Aufzeichnungsschicht (9) gebildeten ersten dielektrischen Dünnfilm (8).

4. Magneto-optisches Aufzeichnungsmedium nach Anspruch 3, ferner mit einem auf der Aufzeichnungsschicht (9) ausgebildeten oberen dielektrischen Dünnfilm (12).

5. Magneto-optisches Aufzeichnungsmedium nach Anspruch 4, ferner mit einer auf der oberen dielektrischen Schicht (12) ausgebildeten Schutzschicht (13) und einem zweiten magneto-optischen Aufzeichnungsmedium (7', 8', 9', 12', 13'), das gebildet wird aus: einem zweiten lichtdurchlässigen Substrat (7'), einem auf dem zweiten lichtdurchlässigen Substrat (7') ausgebildeten zweiten dielektrischen Dünnfilm (8'), einer auf dem zweiten dielektrischen Dünnfilm (8') ausgebildeten zweiten mehrschichtigen Aufzeichnungsschicht (9'), wobei die zweite mehrschichtige Aufzeichnungsschicht (9') die gleiche Struktur aufweist wie die erste mehrschichtige Aufzeichnungsschicht (9), einer auf der zweiten mehrschichtigen Aufzeichnungsschicht (9') ausgebildeten zweiten oberen dielektrischen Schicht (12') und einer auf der zweiten oberen dielektrischen Schicht (12') ausgebildeten zweiten Schutzschicht (13'), wobei das Aufzeichnungsmedium (7, 8, 9, 12, 13) und das zweite Aufzeichnungsmedium (7', 8', 9', 12', 13') derart miteinander verbunden sind, daß die erste Schutzschicht (13) und die zweite Schutzschicht (13') einander zugewandt sind.

**Revendications**

1.  Support d'enregistrement magnéto-optique comprenant un substrat transparent (7) et une couche d'enregistrement (9) formée sur ce substrat (7), dans lequel cette couche d'enregistrement (9) a une structure multicouche composée d'une première couche (11) unitaire et d'une seconde couche (10) unitaire superposées alternativement l'une sur l'autre, et dans lequel cette couche d'enregistrement (9) peut être produite en formant alternativement la première couche (11) unitaire composée de $(Fe_xCo_{1-x})_{1-y}M_y$, où M représente au moins un élément métallique choisi parmi Pt, Pd et Au, $0,5 \leq x \leq 1,0$ et $0,01 \leq y \leq 0,1$, et en formant la seconde couche (10) unitaire composée d'au moins un métal choisi parmi Nd, Dy, Gd et Tb.

2.  Support d'enregistrement magnéto-optique selon la revendication 1, caractérisé en ce que la première couche unitaire a une épaisseur de 1 à 4 couches atomiques et la seconde couche unitaire a une épaisseur de 0,5 à 2 couches atomiques, et dans lequel respectivement 20 à 300 couches de cette première et de cette seconde couches unitaires sont superposées alternativement les unes sur les autres.

3.  Support d'enregistrement magnéto-optique selon la revendication 1 ou 2, comprenant en outre une première pellicule (8) mince diélectrique formée entre le substrat (7) et la couche d'enregistrement (9).

4.  Support d'enregistrement magnéto-optique selon la revendication 3, comprenant en outre une pellicule (12) mince diélectrique supérieure formée sur la couche d'enregistrement (9).

5.  Support d'enregistrement magnéto-optique selon la revendication 4, comprenant en outre une couche (13) protectrice formée sur la couche (12) diélectrique supérieure et un second support d'enregistrement magnéto-optique (7', 8', 9', 12', 13') composé d'un second substrat (7') transparent, d'un seconde pellicule (8') mince diélectrique formée sur ce second substrat (7') transparent et une seconde couche (9') d'enregistrement multicouche formée sur la seconde pellicule (8') mince diélectrique, cette seconde couche (9') d'enregistrement multicouche ayant la même structure que celle de la première couche (9) d'enregistrement multicouche, une seconde couche (12') diélectrique supérieure formée sur la seconde couche (9') d'enregistrement multicouche et une seconde couche (13') protectrice formée sur la seconde couche (12') diélectrique supérieure, ce support d'enregistrement (7, 8, 9, 12, 13) et ce second support d'enregistrement (7', 8', 9', 12', 13') étant liés l'un à l'autre de telle manière que la première couche (13) protectrice et la seconde couche (13') protectrice se fassent face.

3A

3D 3E

6B

→ Ar GAS

3B 3C

4 5

3

Tb FeCo 2A

1 6C 2

6A 6

S1 S2

VACUUM
PUMP

# F I G . 1

| PROTECTIVE LAYER | 13 |
| SiOx | 12 |
| FeCo+Pt | |
| Tb | 11 |
| FeCo+Pt | |
| Tb | 10 |
| FeCo+Pt | |
| ⋮ | 9 |
| SiOx | 8 |
| PC SUBSTRATE | 7 |

# F I G . 3

— 13

— 12

— 9

— 8

— 7A

— 7

# FIG.2

FIG.4